# EUROPEAN PATENT APPLICATION

(11) **EP 3 876 063 A1**
(43) Date of publication of application: **08.09.2021**
(21) Application number: 21158576.5
(22) Date of filing: 23.02.2021
(51) Int. Cl.: G05D 1/00, G05D 1/02, A01D 34/00

(54) **ROBOTIC WORK TOOL SYSTEM AND METHOD FOR REDEFINING A WORK AREA PERIMETER**

(30) Priority: 03.03.2020 SE 2050240
(71) Applicant: HUSQVARNA AB, 561 82 Huskvarna (SE)
(72) Inventor: MÅRTENSSON, Anton, 553 33 JÖNKÖPING (SE); ÄRLIG, Ulf, 564 35 BANKERYD (SE); WIKESTAD, Daniel, 335 71 HESTRA (SE)

(57) **Abstract**

A robotic work tool system (200) for redefining a work area perimeter (150) surrounding a work area (105) in which a robotic work tool (100) is subsequently intended to operate. The work area perimeter (150) comprises a plurality of boundary segments (155,160). The robotic work tool system (200) comprises at least one boundary detection unit (170) configured to detect a position of a boundary segment (155,160) of the work area perimeter (150). The robotic work tool system (200) further comprises at least one controller (110,210) configured to determine if a detected position of a boundary segment (155,160) is closer than a threshold distance to a safety perimeter (330). The at least one boundary detection unit (170) is not allowed to cross the safety perimeter (330). The at least one controller (110,210) is further configured to redefine the detected boundary segment (155,160) based on the determination whether the detected boundary segment (155,160) is closer than the threshold distance to the safety perimeter (330).

## Description

### TECHNICAL FIELD

This disclosure relates to a robotic work tool system as well as a method for redefining a work area perimeter surrounding a work area in which a robotic work tool is subsequently intended to operate.

### BACKGROUND

A robotic work tool is an autonomous robot apparatus that is used to perform certain tasks, e.g. for cutting lawn grass. A robotic work tool may be assigned an area, hereinafter referred to as a work area, in which the robotic work tool is intended to operate. This work area may be defined by the perimeter enclosing the work area. This perimeter may include the borders, or boundaries, which the robotic work tool is not intended to cross.

There exist different ways of setting these boundaries for the robotic work tool. Traditionally, the boundaries, or the perimeters, for the work areas have been set manually by a user or operator. The user manually sets up a boundary wire around the area, or lawn, which defines the area to be mowed. A control signal may then be transmitted through the boundary wire. The control signal may preferably comprise a number of periodic current pulses. As is known in the art, the current pulses will typically generate a magnetic field, which may be sensed by the robotic work tool. The robotic work tool may accordingly use these signals from the wire to determine whether the robotic work tool is close to, or is crossing a boundary wire. As the robotic work tool crosses the boundary wire, the direction of the magnetic field will change. The robotic work tool will be able to determine that the boundary wire has been crossed and take appropriate action to return into the work area. As previously stated, these boundary wires are manually set up and are typically very time consuming to put into place. Once the boundary wires are put into place, the user typically rather not moves them.

In view of the above, another way to set the boundaries for a robotic work tool has been proposed, namely a way that does not use physical boundary wires. The robotic work tool may use a satellite navigation device and/or a deduced reckoning navigation sensor to remain within a work area by comparing the successive determined positions of the robotic work tool against a set of geographical coordinates defining the boundary of the work area. This set of boundary defining positions may be stored in a memory, and/or included in a digital (virtual) map of the work area.

The above-described non-physical i.e. virtual, boundaries, for a work area may reduce the time necessary for installation and setting the boundaries for the work area. The non-physical boundaries may be smooth to install. Generally, they may be set by using a so-called "walk-the-dog" approach. Then the robotic work tool is driven one lap around the work area in order to establish the set of geographical coordinates defining the boundary of the work area in which the robotic work tool is intended to operate. As the boundaries are easy to set, they are also easy to move if the work area, for example, changes. Accordingly, non-physical boundaries provide a flexible solution for defining a work area.

### SUMMARY

Even if the use of non-physical boundaries has many advantages, there do exist drawbacks with the installation of the above proposed wireless work area perimeter. The installation process may still take a long time to perform and may require a lot of attention from a user in order to perform it accurately, especially for large and complex installations. Therefore, work areas with non-physical boundaries may typically be quite roughly defined. For example, areas in which the robotic work tool should not operate are typically not excluded from the work area. In order to overcome the problem of time-consuming installation processes, semi-automatic solutions for redefining work areas have been proposed. However, these semi-automatic solutions are generally not accurate enough meaning that they do not cover the complete work area and furthermore do not ensure that the robotic work tool only operates within the area which it is intended to.

Thus, there is a need for a solution that allows the work area to be more accurately defined, which ensures that the defined work area perimeter only surrounds the actual work area in which the robotic work tool is subsequently intended to operate.

In view of the above, it is therefore a general object of the aspects and embodiments described throughout this disclosure to provide a solution for defining a work area perimeter in a time efficient, but still accurate, way.

This general object has been addressed by the appended independent claims. Advantageous embodiments are defined in the appended dependent claims.

According to a first aspect, there is provided a robotic work tool system for redefining a work area perimeter surrounding a work area in which a robotic work tool is subsequently intended to operate. The work area perimeter comprises a plurality of boundary segments.

In one exemplary embodiment, the robotic work tool system comprises at least one boundary detection unit. The at least one boundary detection unit is configured to detect a position of a boundary segment of the work area perimeter. The robotic work tool system further comprises at least one controller. The at least one controller is configured to determine if a detected position of a boundary segment is closer than a threshold distance to a safety perimeter. The at least one boundary detection unit is not allowed to cross the safety perimeter. The at least one controller is further configured to redefine the boundary segment of the work area perimeter based on the determination whether the detected position of the boundary segment is closer than the threshold distance to the safety perimeter.

In some embodiments, the at least one controller is further configured to determine if the detected position of the boundary segment is closer than a threshold distance to an object. The at least one controller may be configured to determine if the detected boundary segment is closer than the threshold distance to the object based, on for example, collision or contact-less sensing.

In some embodiments, the at least one controller is configured to, in response to determining that the position of the boundary segment is closer than the threshold distance to at least one of an object and the safety perimeter, redefine the detected boundary segment by setting the detected boundary segment to a non-movable boundary segment.

In some embodiments, the at least one controller is configured to, in response to determining that the position of the boundary segment is not closer than the threshold distance to any of an object and the safety perimeter, redefine the boundary segment by moving the segment to a new boundary segment position. The boundary segment may be moved a distance in a direction of travel of the boundary detection unit to the new movable boundary segment position. For example, the boundary segment may be moved a distance that is between 50 mm and 500 mm.

In some embodiments, the at least one controller is configured to, in response to determining that the position of the boundary segment is not closer than the threshold distance to any of an object and the safety perimeter, redefine the boundary segment by crossing the boundary segment and moving the boundary segment a distance to a new boundary segment position. The boundary segment is moved a distance that is based on the crossing.

In some embodiments, the boundary segment is moved outwards, thereby expanding the work area.

In some embodiments, the boundary segment of the work area perimeter is redefined based on a classification of the boundary segment. Each of the boundary segments of the work area perimeter may be classified as a movable boundary segment, which the boundary detection unit is allowed to cross and the at least one controller is allowed to redefine, or a non-movable boundary segment, which the at least one controller is not allowed to move. For example, the at least one controller may be configured to, prior to redefining the boundary segment of the work area perimeter, determine whether the boundary segment is a movable boundary segment or a non-movable boundary segment.

In some embodiments, the at least one boundary detection unit is configured to detect a position of a boundary segment of the work area perimeter by determining a present position of the boundary detection unit in relation to a virtual boundary. The at least one boundary detection unit may be configured to determine the present position by wirelessly receiving a positioning signal.

In some embodiments, the robotic work tool system further comprises a user interface configured to display the redefined work area perimeter.

In some embodiments, the boundary detection unit is a robotic work tool. The robotic work tool may be a robotic lawn mower.

According to a second aspect, there is provided a method implemented by the robotic work tool system according to the first aspect.

In one exemplary implementation, the method is performed by a robotic work tool system for redefining a work area perimeter surrounding a work area in which a robotic work tool is subsequently intended to operate. The work area perimeter comprises a plurality of boundary segments. The method comprises detecting a position of a boundary segment of the work area perimeter and determining if the detected position of the boundary segment is closer than a threshold distance to a safety perimeter. The at least one boundary detection unit is not allowed to cross the safety perimeter. The method further comprises redefining the boundary segment of the work area perimeter based on the determination whether the position of the boundary segment is closer than the threshold distance to the safety perimeter.

In some embodiments, the method further comprises determining if the detected position of the boundary segment is closer than a threshold distance to an object.

In some embodiments, in response to determining that the position of the boundary segment is closer than the threshold distance to at least one of an object and the safety perimeter, the step of redefining the boundary segment comprises setting the detected boundary segment to a non-movable boundary segment.

In some embodiments, in response to determining that the position of the boundary segment is not closer than the threshold distance to any of an object and the safety perimeter, the step of redefining the boundary segment comprises moving the position of the boundary segment to a new boundary segment position. In other embodiments, in response to determining that the position of the boundary segment is not closer than the threshold distance to any of an object and the safety perimeter, the step of redefining the boundary segment comprises crossing the boundary segment and moving the detected position of the boundary segment a distance to a new boundary segment position. The detected boundary segment is moved a distance that is based on the crossing.

In some embodiment, the detected boundary segment of the work area perimeter is redefined based on a classification of the boundary segment. Each of the boundary segments of the work area perimeter may be classified as a movable boundary segment position, which is redefinable and which the boundary detection unit is allowed to cross, or a non-movable boundary segment position that is not movable. For example, the method may further comprise, prior to redefining the boundary segment of the work area perimeter, determining whether the boundary segment is a movable boundary segment or a non-movable boundary segment.

Some of the above embodiments eliminate or at least reduce the problems discussed above. A robotic work tool system and method are thus provided which may redefine a work area perimeter such that a more accurate work area perimeter is created. The work area may be easy to define, while still being defined with a high precision. By determining whether a detected position of a boundary segment is closer than a threshold distance to a safety perimeter, it may be possible to create a work area perimeter close to the safety perimeter, but without extending beyond it. With the proposed redefining process, the precision of the work area may be further improved such that the work area perimeter surrounds the complete work area, while still excluding areas that are not intended to be covered.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

These and other aspects, features and advantages will be apparent and elucidated from the following description of various embodiments, reference being made to the accompanying drawings, in which:
Figure 1 shows a schematic overview of a robotic work tool in a work area;
Figure 2 illustrates a schematic view of a robotic work tool system according to one embodiment;
Figure 3 shows an example embodiment of a boundary definition unit within a work area;
Figure 4 shows a boundary definition unit moved to redefine a work area perimeter;
Figures 5a and 5b show flowcharts of an example method performed by a robotic work tool system; and
Figure 6 shows a schematic view of a computer-readable medium according to the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

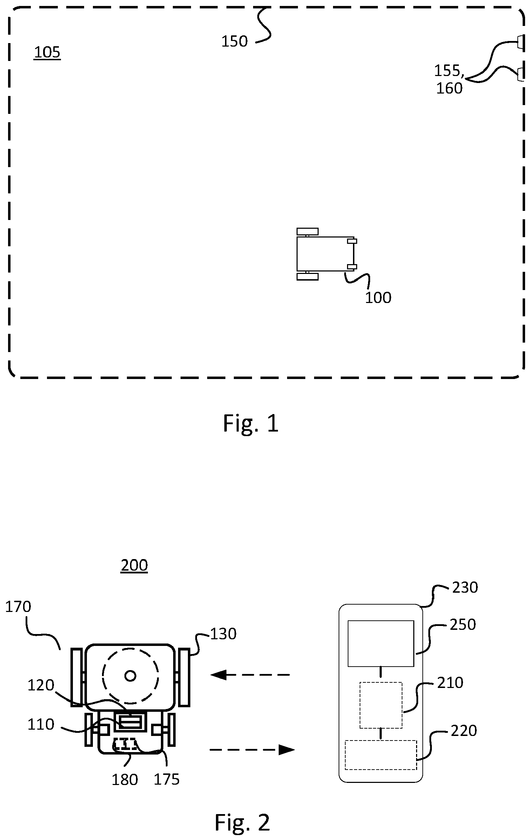

In one of its aspects, the disclosure presented herein concerns a robotic work tool system for redefining a work area perimeter surrounding a work area in which a robotic work tool subsequently is intended to operate. Figure 1 illustrates a schematic overview of a robotic work tool 100 in such a work area 105. As will be appreciated, the schematic view is not to scale. If the work area 105 is a lawn and the robotic work tool 100 is a robotic lawn mower, the work area 105 is the area to be mowed by the robotic work tool 100. As seen in Figure 1, the work area 105 is surrounded by a work area perimeter 150, which sets the boundaries for the work area 105, i.e. defines the boundaries for the work area 105. The work area perimeter 150 comprises a plurality of boundary segments. A boundary segment is a segment of the work area perimeter 150. Thus, the plurality of boundary segments make up the work area perimeter. The robotic work tool 100 is intended to operate within the work area 105 and remain within this area due to the defined work area perimeter 150. By defining the work area perimeter 150, the robotic work tool 100 will not cross the perimeter and only operate within the enclosed area, i.e. the work area 105.

With reference to Figure 2, a first embodiment according to the first aspect will now be described. Figure 2 shows a schematic view of a robotic work tool system 200. The robotic work tool system 200 comprises at least one boundary detection unit 170 and at least one controller 110, 210.

The robotic work tool system 200 will mainly be described in general terms of a robotic work tool system 200 for redefining a work area perimeter 150 in which an autonomous robot designed for mowing a lawn is subsequently intended to operate. However, it should be understood that the robotic work tool system 200 described herein may be implemented together with any type of autonomous machine that may perform a desired activity within a desired work area. Examples of such types of autonomous machines include, without limitation, cleaning robotic work tools, polishing work tools, repair work tools, surface-processing work tools (for indoors and/or outdoors), and/or demolition work tool or the like.

The at least one boundary detection unit 170 may be, for example, the robotic work tool 100 which is subsequently intended to operate within the work area 105. Alternatively, the at least one boundary detection unit 170 may be a device used for redefining the work area 105, which is a device separated from the robotic work tool 100 and which is not intended to subsequently operate within the work area 105.

Figure 2 shows a schematic overview of one exemplary boundary detection unit 170. As previously described, the boundary detection unit 170 may be exemplified in a variety of ways, but the boundary detection unit 170 is here exemplified as a robotic work tool 100. The robotic work tool 100 may be, for example, a robotic lawnmower. As will be appreciated, the schematic view is not to scale. Figure 2 shows a boundary detection unit 170 having a body and a plurality of wheels 130. The wheels 130 of the boundary detection unit 170 is to illustrate that the boundary detection unit 170 is movable. However, it may be appreciated that the wheels 130 may be embodied as, for example, caterpillar threads.

The at least one boundary detection unit 170 is configured to detect a position of a boundary segment of the work area perimeter 150. Thus, when the at least one boundary detection unit 170 moves within the work area 105, it is configured to detect a part of the work area perimeter 150. The boundary detection unit 170 is configured to detect a position of the boundary segment of the work area perimeter 150. The at least one boundary detection unit 170 may be configured to detect a position of a boundary segment of the work area perimeter 150 by determining a present position of the boundary detection unit 170 in relation to a virtual boundary. For example, the at least one boundary detection unit 170 may be configured to determine the present position by wirelessly receiving a positioning signal.

As may be appreciated, the robotic work tool system 200 may comprise, in some embodiments, a plurality of boundary detection units 170 that move within the work area 105 to detect boundary segments. This may be advantageous if the work area 105 is very large. By using a plurality of boundary detection units 170, the redefining of the working area perimeter 150 may be performed more quickly.

As also illustrated in Figure 2, the boundary detection unit 170 may comprise a position unit 175. The position unit 175 may be configured to receive a positioning signal or positioning data. The position unit 175 may comprise a satellite signal receiver, which may be a Global Navigation Satellite System (GNSS) satellite signal receiver. An example of such a system is Global Positioning System (GPS). The position unit 175 may be configured to use, for example, Real-Time Kinematic, RTK, positioning. In advantageous embodiments, the at least one position unit 175 may use RTK-GNSS positioning. A RTK-GNSS system is based on satellite communication. The at least one position unit 175 may be connected to the at least one controller 110, 210 of the robotic work tool system 200 for enabling the controller 110, 210 to determine current positions for the boundary detection unit 170.

In some embodiments, the at least one position unit 175 may further comprise a deduced reckoning navigation sensor for providing signals for deduced reckoning navigation, also referred to as dead reckoning. Examples of such deduced reckoning navigation sensors are odometers, inertial measurement units (IMUs) and compasses. These may comprise, for example, wheel tick counters, accelerometers and gyroscopes. Additionally, visual odometry may be used to further strengthen the dead reckoning accuracy. Thus, in some embodiments, the at least one controller 110, 210 may be configured to use dead reckoning to extrapolate the position data if the quality, or the strength, of the position data received from the satellite signal receiver goes below an acceptable level. The dead reckoning may then be based on the last known position received from the satellite signal receiver.

As previously described, the robotic work tool system 200 comprises at least one controller 110, 210. The at least one controller 110, 210 may be, for example, a controller 110 located in the at least one boundary detection unit 170. In such embodiments, the at least one boundary detection unit 170 corresponds to the robotic work tool system 200. According to another example, the at least one controller 110, 210 may be located in a device 230 that is separated from the at least one boundary detection unit 170. When the at least one controller 210 is located in another device 230 than in the at least one boundary detection unit 170, the separate device 230 is communicatively coupled to the at least one boundary detection unit 170. They may be communicatively coupled to each other by a wireless communication interface. Additionally, or alternatively, the wireless communication interface may be used to communicate with other devices, such as servers, personal computers or smartphones, charging stations, remote controls, other robotic work tools or any remote device, which comprises a wireless communication interface and a controller. Examples of such wireless communication are Bluetooth®, Global System Mobile (GSM), Long Term Evolution (LTE) and 5G or New Radio (NR), to name a few.

In one embodiment, the at least one controller 110, 210 is embodied as software, e.g. remotely in a cloud-based solution. In another embodiment, the at least one controller 110, 210 may be embodied as a hardware controller. The at least one controller 110, 210 may be implemented using any suitable, publicly available processor or Programmable Logic Circuit (PLC). The at least one controller 110, 210 may be implemented using instructions that enable hardware functionality, for example, by using executable computer program instructions in a general-purpose or special-purpose processor that may be stored on a computer readable storage medium (disk, memory etc.) to be executed by such a processor. The controller 110, 210 may be configured to read instructions from a memory 120, 220 and execute these instructions to control the operation of the at least one boundary detection unit 170 including, but not being limited to, the propulsion of the at least one boundary detection unit 170 including. The memory 120, 220 may be implemented using any commonly known technology for computer-readable memories such as ROM, RAM, SRAM, DRAM, FLASH, DDR, SDRAM or some other memory technology.

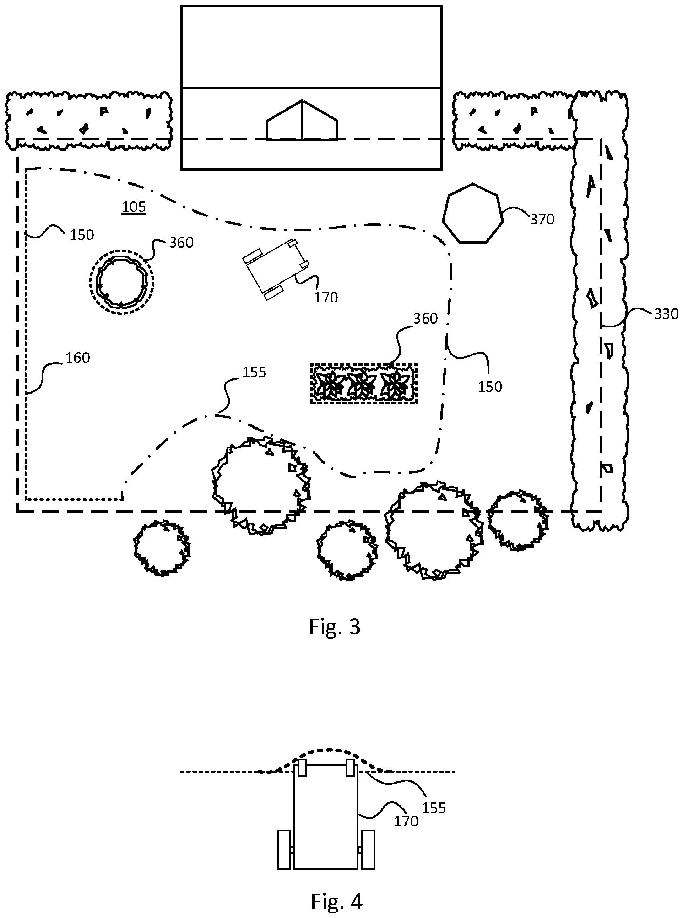

The present disclosure is now going to be described with reference to Figure 3. Figure 3 illustrates an example of a boundary detection unit 170 moving within a work area 105. The work area 105 in Figure 3 is illustrated as a garden. Most of the garden is surrounded by a perimeter, the work area perimeter 150. The work area perimeter 150 is used to set the boundaries for the area that a robotic work tool 100 is intended to operate within.

As previously described, the work area perimeter 150 comprises a plurality of boundary segments 155, 160. Thus, a plurality of boundary segments 155, 160 make up the work area perimeter 150. The boundary segments 155, 160 may have a classification. Each of the boundary segments 155, 160 of the work area perimeter 150 may be classified as a movable boundary segment 155 or a non-movable boundary segment 160. In Figure 3, the dashed dotted irregular perimeter part, i.e. the right part of the work area perimeter 150, comprises a plurality of movable boundary segments 155. The at least one controller 110, 210 is allowed to redefine these boundary segments 155. The boundary detection unit 170 is generally allowed to cross these boundary segments 155. A perimeter part that comprises a plurality of movable boundary segments 155 may constitute a boundary that is not critical for the robotic work tool 100 to cross. They may be used to set, for example, boundaries close to a wall or a hedge, or boundaries that are not close to any other object. The dashed straight perimeter part, i.e. the left part of the work area perimeter 150 in Figure 3, comprises a plurality of non-movable boundary segments 160. The at least one controller 110, 210 is not allowed to move these boundary segments 160. In some embodiments, the boundary detection unit 170 may not be allowed to cross these boundary segments 160. However, in other embodiments, the boundary detection unit 170 may be allowed to cross these boundary segments 160. Boundaries comprising of a plurality of non-movable boundary segments 160 may be used, for example, to set boundaries around a pool or around flowers, as illustrated in Figure 3.

The work area perimeter 150 may be defined in several different ways. The work area perimeter 150 may be defined in any way as long as it roughly sets the boundaries for the work area 105 in which the robotic work tool 100 is subsequently intended to operate. For example, one way of defining the work area perimeter 150 is to use the so-called "walk-the-dog"-approach. As previously described, the "walk-the-dog" approach is a procedure where a boundary definition unit is moved around the work area 105 to set the boundaries, i.e. the work area perimeter 150, for the area. When the boundary definition unit 170 is moved around the area, a virtual boundary is created for the area. By dropping points, i.e. defining positions, when the boundary definition unit 170 is moved around the area, the virtual boundary may be defined. The points may be set automatically with predefined gaps between them or may be set by a user, for example via an installation application. The boundary definition unit 170 may be the robotic work tool 100 which is intended to operate within the area, the boundary detection unit 170 used to redefine the work area perimeter 150, or any other device that may be used for defining a work area perimeter 150, such as e.g. a mobile phone. In some embodiments, the boundary definition unit may be driven by an operator who manually steers the boundary definition unit, using e.g. a remote control, when defining the first work area perimeter 150. A remote control may, by way of example, be implemented as a software application in a mobile phone. To define the perimeter around the work area 105, the boundary definition unit may be driven at least a portion of a lap around the work area 105. Preferably, the boundary definition unit may be driven a complete lap or substantially a complete lap in order to define a perimeter around the work area 105. If the boundary definition unit is not driven a complete lap around the work area 105, the at least one controller 110, 210 may be configured to close the loop by connecting the point where the boundary definition unit started the lap with the point where the boundary definition unit ended the lap. This may be performed by interpolating the "missing" portion of the lap around the work area 150 such that a closed loop around the work area 105 is defined. Accordingly, a "connected" work area perimeter 105, i.e. an enclosed area, may be defined regardless of whether the boundary definition unit is moved a complete lap around the work area 105 or not. This may also prevent problems that may arise if the boundary definition unit does not finish the lap around the work area exactly in the same place at the boundary definition unit started the lap.

In some embodiments, when the work area perimeter 150 is first defined, a user may have the possibility to classify each part of the defined work area perimeter 150. Each boundary segment 155, 160 of the work area perimeter 150 may be classified as a movable part comprising a movable boundary segment 155, or a non-movable part comprising a non-movable boundary segment 160. This may be performed, for example, in an installation application.

As also illustrated in Figure 3, the defined work area perimeter 150 is in turn surrounded by an outer perimeter. This outer perimeter is called a safety perimeter 330. The safety perimeter 330 is a safety boundary, which the at least one boundary detection unit 170 is not allowed to cross. Thus, the safety perimeter 330 is a definite, or absolute, border for the work area 105. The safety perimeter 330 is generally defined in connection with the defining of the work area perimeter 150 around the work area 105. The safety perimeter 330 may be defined in several ways, for example by the at least one boundary detection unit 170, by a boundary definition unit or with an external tool, e.g. in a map in an installation application. The safety perimeter 330 is a safety boundary, which the boundary definition unit 170 is not allowed to go outside when redefining the work area perimeter 150 around the work area 105.

The present disclosure provides a way of redefining a first defined work area perimeter 150 such that the redefined work area perimeter 150 more accurately correspond to the work area 105 in which a robotic work tool 100 subsequently intended to operate. As the present disclosure presents a way of redefining the work area perimeter 150, the first defined work area perimeter 150 may be defined very roughly and thus be defined in a more time efficient manner. Furthermore, as the work area perimeter 150 is surrounded by the safety perimeter 330 it may be assured that the redefined work area perimeter 150 never will extend beyond this perimeter. This is now going to be described in more detail.

The robotic work tool system 200 presented herein redefines a work area perimeter 150, which is surrounded by a safety perimeter 330. After the definition of the work area perimeter 150, the boundary definition unit 170 may be set to a "challenge mode" to start the process of redefining the work area perimeter 150. The "challenge mode" may be ongoing for some time, for example several days, until the challenge mode is ended, either automatically or by the user. During this time, the at least one boundary definition unit 170 is moved within the work area 105 surrounded by the work area perimeter 150 and is configured to detect a position of a boundary segment 155, 160 of the work area perimeter 150. The at least one controller 110, 210 is configured to determine if a detected position of a boundary segment 155, 160 is closer than a threshold distance to the safety perimeter 330. As previously described, the at least one boundary detection unit 170 is not allowed to cross the safety perimeter 330. After it has been determined if the detected position of the boundary segment 155, 160 is closer than a threshold distance to the safety perimeter 330, the at least one controller 110, 210 is configured to redefine the detected boundary segment 155, 160 of the work area perimeter 150 based on the determination whether the boundary segment 155, 160 is closer than the threshold distance to the safety perimeter 330.

By introducing the above proposed robotic work tool system 200, the previously described disadvantages are eliminated or at least reduced. With the provided robotic work tool system 200, it is possible to refine a defined preliminary work area perimeter 150, such that a more accurate work area perimeter 150 is defined. Furthermore, by introducing a way of redefining a work area perimeter 150, the first defined work area perimeter 150 may be very roughly defined. Thus, a lot of time may be saved during the installation process of the work area perimeter 150. In addition to this, as the robotic work tool system 200 always compares the position of the boundary segment against the safety perimeter, it may be assured that the redefined working area perimeter 150 never extends beyond this safety perimeter 330 and that all safety regulations may be fulfilled. It may be possible to refine the perimeter surrounding the work area 105, such that it may be more accurate than before, but without creating boundaries that extend beyond the safety perimeter 330. Thus, the provided robotic work tool system 200 provides a solution that allows the work area 105 to be more accurately defined, which ensures that the defined work area perimeter 150 only surrounds the actual work area in which the robotic work tool is subsequently intended to operate.

In some embodiments, the at least one controller 110, 210 may further be configured to determine if the detected position of the boundary segment 155, 160 is closer than a threshold distance to an object 370, or an obstacle. The object may be any object located within the work area 105 and may be, for example, a pond or a flowerbed as illustrated in Figure 3. However, other objects such as corridors, stones, statues, playhouses and sheds may also be examples of such objects 370. The at least one controller 110, 210 may be configured to determine if the detected position of the boundary segment 155, 160 is closer than the threshold distance to the object based on, for example, collision or contact-less sensing. The boundary detection unit 170 comprising at least one sensor unit 180 may achieve the collision or contact-less sensing. The at least one sensor unit 180 may be configured to obtain sensed input data. The obtained sensed input data may be, without limitations, photo data, odometric data, position data, direction data etc. The at least one sensor unit 180 may be, for example, at least one of a camera, a radar sensor, a lidar sensor, an ultrasonic sensor, a compass and, a position unit.

The threshold distance that the at least one controller 110, 210 may be configured to compare the position of the boundary segment against may be any suitable distance. It may depend, for example, on the distance that is wanted between the redefined work area perimeter 150 and the safety perimeter 330, and between the redefined work area perimeter 150 and the object 370. The threshold distance may be the same threshold distance for both the safety perimeter 330 and the object 370. Alternatively, the threshold distance may be set to one distance for the object 370 and set to another distance for the safety perimeter 330. Thus, in these embodiments, a robotic work tool 100 that is operating within the redefined work area 105 may be allowed to come closer to an object 370 within the work area than the safety perimeter 330, or vice versa.

The at least one controller 110, 210 may be configured to, in response to determining that the position of the boundary segment 155, 160 is closer than the threshold distance to at least one of the object 370 and the safety perimeter 330, redefine the boundary segment 155 by setting the boundary segment 155 to a non-movable boundary segment 160. Thus, when a position of a boundary segment 155, 160 is close enough to the safety boundary 330 or to an object, the boundary segment 155, 160 should not be possible to move any further and is then set to a non-movable boundary segment 160. As previously described, a non-movable boundary segment 160 is a boundary segment that the at least one controller is not allowed to move.

In some embodiments, in response to determining that that the position of the boundary segment 155 is not closer than a threshold distance to any of an object and the safety perimeter 330, the at least one controller 110, 210 may be configured to redefine the boundary segment 155 by moving the boundary segment 155 to a new boundary segment position. Thus, when the at least one controller 110, 210 determines that the detected position of the boundary segment 155 is not close to an object or to the safety perimeter 330, the boundary segment 155 may be moved such that the work area 105 may be expanded. This is illustrated in Figure 4. In Figure 4, the boundary detection unit 170 has detected a position of a boundary segment that is not close to any object 370 or safety perimeter 330. The position of the boundary segment is located at the thin dashed line 155 illustrated in Figure 4. The at least one controller 110, 210 is then configured to move the boundary segment 155 to a new boundary segment position. Thus, the at least one controller 110, 210 is configured to move the detected boundary segment of the thin line, to the new boundary segment position, illustrated as the thicker line in Figure 4. The boundary segment 155 may be moved a distance in a direction of travel of the boundary detection unit 170 to the new boundary segment position, as illustrated in Figure 4. The boundary segment 155 may be moved a distance that is, for example, between 50 and 500 mm.

In other embodiments, in response to determining that that the position of the boundary segment 155 is not closer than a threshold distance to any of an object and the safety perimeter 330, the at least one controller 110, 210 may be configured to redefine the boundary segment 155 by letting the boundary detection unit 170 cross the boundary segment 155. Thus, the boundary detection unit 170 may drive past the detected position of the boundary segment. The at least one controller 110, 210 is thereafter configured to move the boundary segment 155 a distance to a new boundary segment position based on this crossing. Thus, the boundary segment 155 may be moved a distance that is based on the crossing. For example, the boundary segment 155 may be moved to a position determined by the boundary definition unit 170 after crossing the boundary segment 170. The boundary detection unit 170 may cross the boundary segment 155 by a predetermined crossing distance. The predetermined crossing distance may be, for example, 10-20 cm. However, this distance may be larger, or smaller, as long as the boundary detection unit 170 does not cross the safety perimeter 330. Furthermore, the boundary segment 155 may be moved based on a condition that no collision or safety boundary 330 has been detected after crossing the boundary segment 155. In advantageous embodiments, the boundary segments 155 is moved outwards, thereby expanding the work area 105. With reference to Figure 4, this means that the boundary segments 155 of the work area perimeter 150 is moved towards the safety perimeter 330.

As previously described, the boundary segments of the work area perimeter may be classified as movable boundary segments 155 and non-movable boundary segments 160. In these embodiments, a boundary segment 155, 160 of the work area perimeter 150 may be redefined based on the classification of the boundary segment 155, 160. The at least one controller 110, 210 may then be configured to, prior to redefining boundary segment 155, determine whether the boundary segment 155, 160 is a movable boundary segment 155 or a non-movable boundary segment 160. If the boundary segment 155, 160 is a movable boundary segment, and is not closer to a safety boundary 339 than a threshold distance, then the at least one controller 110, 210 may redefine the boundary segment 155 by moving the boundary segment to a new boundary segment position. Alternatively, if the boundary segment 155, 160 is a non-movable boundary segment 160, the at least one controller 110, 210 is not allowed to move the boundary segment 160 to a new boundary segment, and the boundary detection unit 170 may be configured to continue moving within the work area 105 to detect a new position of a boundary segment 155, 160.

In some embodiments, if the boundary segment is a non-movable boundary segment 160, the at least one controller 110, 210 may be configured to redefine the boundary segment to be a movable boundary segment 155. However, these embodiments may only be applied if certain conditions are fulfilled, e.g. that the non-movable boundary segment 160 no longer is close to an object 370 or the safety perimeter 330. This may be the case if the object 370 or the safety perimeter 330, that the boundary segment previously was close to, has been moved.

Accordingly, the present robotic work tool system 200 provides a time efficient and safe solution for redefining a work area perimeter 150. The robotic work tool system 200 makes it possible to challenge the boundary segments of the working area perimeter 150 as long as they are inside the safety perimeter 330. All movable boundary segments 155 that are encountered by the boundary definition unit 170 is moved outwards by the robotic work tool system 200 as long as possible, either until they are close to an obstacle, such as a building, stone, hedge, tree bush, etc., or until the safety perimeter 330 is reached. Thus, the redefined work area perimeter 150 is going to surround areas within the work area 105 which are to be excluded from the work area 105 and will come as close as possible to the safety perimeter 330. With reference to Figure 3, the pond 370 is going to be surrounded by the redefined work area perimeter 150.

Furthermore, the work area perimeter 150 redefined with the proposed robotic work tool system 200 will accurately define the work area 105. The work area perimeter 150 will be defined to be located at the trees at the lower edge of Figure 3, due to the safety perimeter 330. If the safety perimeter 330 would not be present, the boundary detection unit 170 would continue out from the intended work area 105, between the trees at the lower edge of Figure 3, and would not stop redefining and moving the boundary segments 155 until the boundary definition unit 170 encounters an obstacle. Thus, the redefined work area perimeter 150 would extend beyond the trees and would define a much larger area than the intended work area 105. The redefined work area perimeter 150 would not define the actual work area 105 and there would be no control of where the boundary detection unit 170 would stop. Accordingly, the proposed robotic work tool system 200 provides a safe solution of redefining a work area perimeter 150.

In one embodiment, the robotic work tool system 200 may further comprise a user interface 250, as illustrated in Figure 2. The user interface 250 may for example be a touch user interface. The user interface 250 may be in an apparatus 230 separated from the boundary detection unit 170, but it may be appreciated that the user interface 250 may be located at the boundary detection unit 170. The user interface 250 may be in the same apparatus as the at least one controller 110, 210. However, in one embodiment the user interface 250 may be located in a device separate from the at least one controller 110, 210.

The user interface 250 may be configured to display the redefined work area perimeter 150. It may be displayed to a user/operator who is operating the user interface 250. In one embodiment, the redefined work area perimeter 150 may be displayed in the user interface 250 associated with the first defined work area perimeter.

The user interface 250 may be configured to receive user input from a user during the user's operation and interaction with the user interface 250. The at least one controller 110, 210 may be configured to define a first roughly defined work area perimeter 150 or to adjust the redefined work area perimeter 150 based on the received user input. Thus, the user may manipulate the work area perimeter 150 by interacting with the user interface 250. Additionally, the user may use the user interface 250 to classify, or define, which boundary segments that are movable boundary segments 155 and which boundary segments that are non-movable boundary segments 160.

By providing the user interface 250 as described above, a fast and simple adaptation of a work area perimeter 150 may be achieved. For example, if it for some reason is desirable to redefine the work area perimeter 150 further, this may be achieved by adjusting the redefined work area perimeter 150 to be located a bit further away from, or closer to, the safety boundary 330.

In some embodiments, the boundary detection unit 170 is a robotic work tool 100. In one advantageous embodiment, the robotic work tool 100 may be a robotic lawn mower.

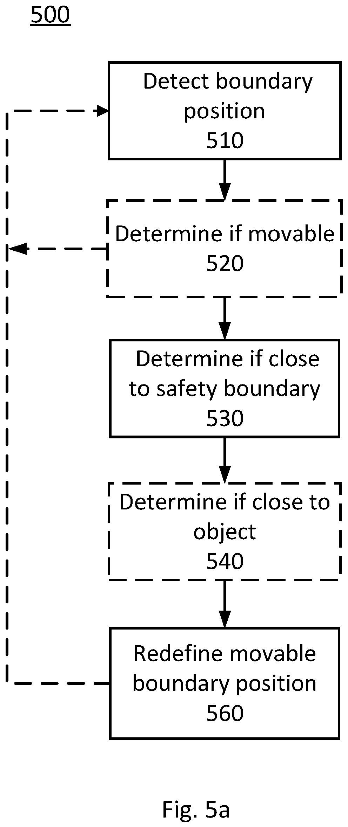

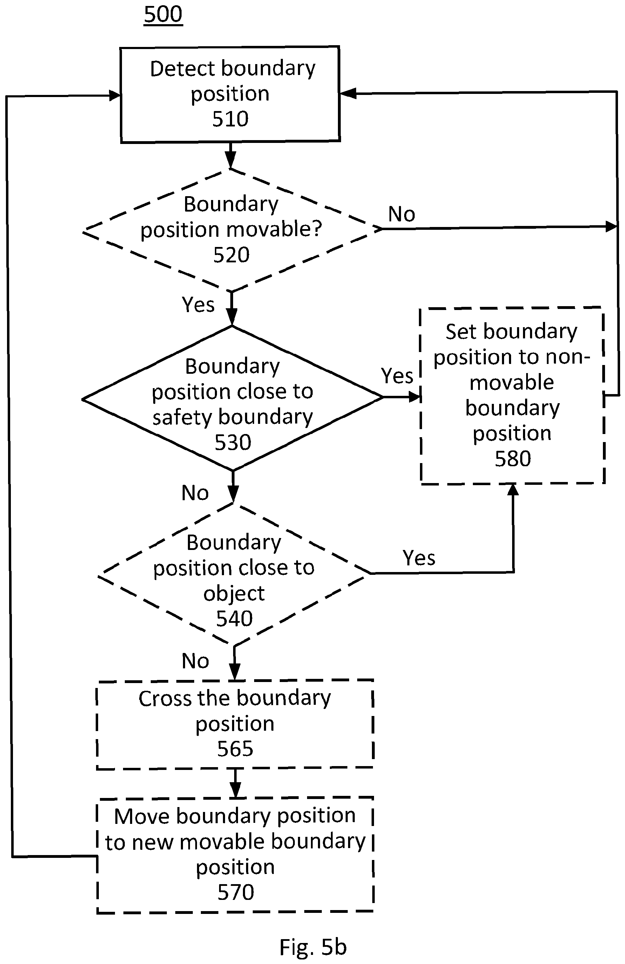

According to a second aspect, there is provided a method implemented in the robotic work tool system according to the first aspect. The method will be described with reference to Figures 5a and 5b.

In one embodiment, the method 500 may be performed by a robotic work tool system 200 for redefining a work area perimeter 150 surrounding a work area 105 in which a robotic work tool 100 is subsequently intended to operate. As illustrated in Figure 5a, the method 500 starts with step 510 of detecting a position of a boundary segment 155, 160 of the work area perimeter 150. The method further comprises the step 530 of determining if the detected position of the boundary segment is closer than a threshold distance to the safety perimeter 330. Thereafter, the method continues with step 560 of redefining the boundary segment 155, 160 of the work area perimeter 150 based on the determination whether the position of the boundary segment 155, 160 is closer than the threshold distance to the safety perimeter 330.

In some embodiments, the method may further comprise step 520 of determining whether the boundary segment 155, 160 is a movable boundary segment 155 or a non-movable boundary segment 160.

In some embodiments, the method 500 may further comprise step 540 of determining if the detected position of the boundary segment 155, 160 is closer than a threshold distance to an object 370.

The method 500 is now going to be described with reference to Figure 5b. Figure 5b illustrates a more detailed example of the method 500. As previously described, the method 500 starts with step 510 of detecting a position of a boundary segment 155, 160 of the work area perimeter 150.

The previously presented method 500 may optionally comprise, prior to redefining the detected boundary segment 155 of the work area perimeter 150, the step 520 of determining whether the boundary segment is a movable boundary segment 155 or a non-movable boundary segment 160. If the boundary segment is a non-movable boundary segment 160, the boundary segment 160 cannot be moved and the boundary segment 160 is redefined by keeping the boundary segment as a non-movable boundary segment 160. For example, the method may return to step 510 again.

The method 500 may optionally comprise the step 540 of determining if the detected position of the boundary segment 155, 160 is closer than a threshold distance to an obj ect.

If the detected position of the boundary segment 155, 160 is not closer than the threshold distance to any of an object 370 and the safety perimeter 330, the method 500 may optionally comprise step 565 of crossing the boundary segment 155, 160. The method 500 may then further comprise step 570 of moving the detected position of the boundary segment 155 a distance to a new boundary segment position. The boundary segment 155 is then moved a distance that is based on the crossing. Alternatively, the method 500 may only comprise step 570 of moving the position of the detected boundary segment 155 to a new boundary segment position. The boundary segment 155 may then be moved, for example, a predetermined distance to a new boundary segment position. According to the embodiments, the work area perimeter 150 is redefined and thereby, the work area perimeter 150 is improved such that it more accurately corresponds to the work area 105 in which the robotic work tool 100 is subsequently intended to operate.

If the detected position of the boundary segment 155, 160 is closer than the threshold distance to at least one of an object 370 and the safety perimeter 330, the method 500 may optionally comprise step 580 of setting the boundary segment 155, 160 to a non-movable boundary segment 160. Thus, if the detected position of the boundary segment 155, 160 is close enough, or too close, to the safety perimeter 330, the boundary segment 155, 160 is redefined by being classified as a non-movable boundary segment 160. This will prevent the boundary segment 160 to be moved any closer to the safety perimeter 330 or the object 370 as the at least one controller 110, 210 is not allowed to move non-movable boundary segments 160.

It may be appreciated that even if step 520, 530 and 540 are shown in a certain order in Figures 5a and 5b, they may be performed in any order as long as the method starts with step 510 of detecting a position of a boundary segment and ends with the step 560 of redefining the boundary segment.

With the proposed method 500 a work area perimeter 150 may be defined in an easy and time efficient way, while the perimeter is still being defined with a high precision in a safe manner. By classifying the segments of the work area perimeter 150 into non-movable and movable boundary segments, all movable boundary segments 155 are only needed to be roughly defined, as they will be redefined by the present method 500. Furthermore, as the work area 105 is surrounded by a safety perimeter 330, it is further ensured that the work area perimeter 150 never is going to extend beyond this perimeter 330.

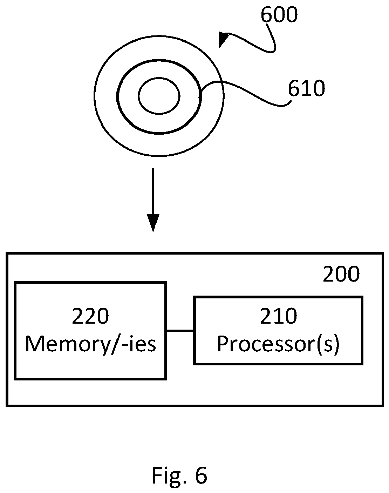

Figure 6 shows a schematic view of a computer-readable medium as described in the above. The computer-readable medium 600 is in this embodiment a data disc 600. In one embodiment, the data disc 600 is a magnetic data storage disc. The data disc 600 is configured to carry instructions 610 that when loaded into a controller, such as a processor, execute a method or procedure according to the embodiments disclosed above. The data disc 600 is arranged to be connected to or within and read by a reading device, for loading the instructions into the controller. One such example of a reading device in combination with one (or several) data disc(s) 600 is a hard drive. It should be noted that the computer-readable medium can also be other mediums such as compact discs, digital video discs, flash memories or other memory technologies commonly used. In such an embodiment, the data disc 600 is one type of a tangible computer-readable medium 600.

The instructions 610 may also be downloaded to a computer data reading device, such as the controller 210 or other device capable of reading computer coded data on a computer-readable medium, by comprising the instructions 610 in a computer-readable signal which is transmitted via a wireless (or wired) interface (for example via the Internet) to the computer data reading device for loading the instructions 610 into a controller. In such an embodiment, the computer-readable signal is one type of a non-tangible computer-readable medium 600.

References to computer program, instructions, code etc. should be understood to encompass software for a programmable processor or firmware such as, for example, the programmable content of a hardware device whether instructions for a processor, or configuration settings for a fixed-function device, gate array or programmable logic device etc. Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Still further, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality.

## Claims

1. A robotic work tool system (200) for redefining a work area perimeter (150) surrounding a work area (105) in which a robotic work tool (100) is subsequently intended to operate, wherein the work area perimeter (150) comprises a plurality of boundary segments (155,160), the robotic work tool system (200) comprising:
at least one boundary detection unit (170) configured to detect a position of a boundary segment (155,160) of the work area perimeter (150);
at least one controller (110,210) configured to:
determine if a detected position of a boundary segment (155,160) is closer than a threshold distance to a safety perimeter (330), wherein the at least one boundary detection unit (170) is not allowed to cross the safety perimeter (330); and
redefine the boundary segment (155,160) of the work area perimeter (150) based on the determination whether the detected position of the boundary segment (155,160) is closer than the threshold distance to the safety perimeter (330).

2. The robotic work tool system (200) according to claim 1, wherein the at least one controller (110,210) further is configured to:
determine if the detected position of the boundary segment (155,160) is closer than a threshold distance to an object (370).

3. The robotic work tool system (200) according to any of claims 1 and 2, wherein the at least one controller (110,210) is configured to, in response to determining that the position of the boundary segment (155,160) is closer than the threshold distance to at least one of an object (370) and the safety perimeter (330), redefine the detected boundary segment (155,160) by:
setting the detected boundary segment (155,160) to a non-movable boundary segment (160).

4. The robotic work tool system (200) according to any of the previous claims,
wherein the at least one controller (110,210) is configured to, in response to determining that the position of the boundary segment (155,160) is not closer than a threshold distance to any of an object (370) and the safety perimeter (330), redefine the boundary segment (155,160) by:
moving the boundary segment (155) to a new boundary segment position.

5. The robotic work tool system (200) according to claim 4, wherein the boundary segment (155) is moved a distance in a direction of travel of the boundary detection unit (170) to the new boundary segment position.

6. The robotic work tool system (200) according to claim 5, wherein the boundary segment (155) is moved a distance that is between 50 and 500 mm.

7. The robotic work tool system (200) according to any of the previous claims,
wherein the at least one controller (110,210) is configured to, in response to determining that the position of the boundary segment (155,160) is not closer than the threshold distance to any of an object and the safety perimeter (330), redefine the boundary segment (155,160) by:
crossing the boundary segment (155); and
moving the boundary segment (155) a distance to a new boundary segment position, wherein the boundary segment (155) is moved a distance that is based on the crossing.

8. The robotic work tool system (200) according to any of claims 4 to 7, wherein the boundary segment (155) is moved outwards, thereby expanding the work area (105).

9. The robotic work tool system (200) according to any of the previous claims,
wherein the boundary segment (155,160) of the work area perimeter (150) is redefined based on a classification of the boundary segment (155,160).

10. The robotic work tool system (200) according to claim 9, wherein each of the boundary segments (155,160) of the work area perimeter (150) is classified as a movable boundary segment (155), which the boundary detection unit (170) is allowed to cross and the at least one controller (110,210) is allowed to redefine, or a non-movable boundary segment (160), which the at least one controller (110,210) is not allowed to move.

11. The robotic work tool system (200) according to claim 10, wherein the at least one controller (110,210) is configured to:
prior to redefining the boundary segment (155,160) of the work area perimeter (150), determine whether the boundary segment (155,160) is a movable boundary segment (155) or a non-movable boundary segment (160).

12. The robotic work tool system (200) according to any of the previous claims, wherein the at least one boundary detection unit (170) is configured to detect a position of a boundary segment (155,160) of the work area perimeter (150) by determining a present position of the boundary detection unit (170) in relation to a virtual boundary.

13. The robotic work tool system (200) according to claim 12, wherein the at least one boundary detection unit (170) is configured to determine the present position by wirelessly receiving a positioning signal.

14. The robotic work tool system (200) according to any of the previous claims, wherein the robotic work tool system (200) further comprises a user interface (250) configured to display the redefined work area perimeter (150).

15. The robotic work tool system (200) according to any of the previous claims, wherein the boundary detection unit (170) is a robotic work tool (100).

16. The robotic work tool system (200) according to claim 15, wherein the robotic work tool (100) is a robotic lawn mower.

17. A method (500) performed by a robotic work tool system (200) for redefining a work area perimeter (150) surrounding a work area 105) in which a robotic work tool (100) is subsequently intended to operate, wherein the work area perimeter (150) comprises a plurality of boundary segments (155,160), the method (500) comprising:
- detecting (510) a position of a boundary segment (155,160) of the work area perimeter (150);
- determining (530) if the detected position of the boundary segment (155,160) is closer than a threshold distance to a safety perimeter (330), wherein the at least one boundary detection unit (170) is not allowed to cross the safety perimeter (330); and
- redefining (560) the boundary segment (155,160) of the work area perimeter (150) based on the determination whether the position of the boundary segment (155,160) is closer than the threshold distance to the safety perimeter (330).

18. The method (500) according to claim 17, wherein the method (500) further comprises:
- determining (540) if the detected position of the boundary segment (155,160) is closer than a threshold distance to an object (370).

19. The method (500) according to any of claims 17 and 18, wherein, in response to determining (530) that the position of the boundary segment (155,160) is closer than the threshold distance to at least one of an object (370) and the safety perimeter (330), the step of redefining (560) the boundary segment (155,160) comprises:
- setting (570) the boundary segment (155,160) to a non-movable boundary segment (160).

20. The method (500) according to any of claims 17 to 19, wherein, in response to determining (530) that the position of the boundary segment (155,160) is not closer than the threshold distance to any of an object (370) and the safety perimeter (330), the step of redefining (560) the boundary segment (155,160) comprises:
- moving (570) the position of the boundary segment (155) to a new boundary segment position.

21. The method (500) according to any of claims 17 to 19, wherein, in response to determining (530) that the position of the boundary segment (155,160) is not closer than the threshold distance to any of an object (370) and the safety perimeter (330), the step of redefining (560) the boundary segment (155,160) comprises:
- crossing (565) the boundary segment (155); and
- moving the detected position of the boundary segment (155) a distance to a new boundary segment position, wherein the boundary segment (155) is moved a distance that is based on the crossing.

22. The method (500) according to any of claims 17 to 21, wherein the boundary segment (155,160) of the work area perimeter (150) is redefined based on a classification of the boundary segment (155,160).

23. The method (500) according to claim 22, wherein each of the boundary segments (155,160) of the work area perimeter (150) is classified as a movable boundary segment (155), which is redefinable and which the boundary detection unit (170) is allowed to cross, or a non-movable boundary segment (160) which is not movable.

24. The method (500) according to claim 23, wherein the method (500) further comprises, prior to redefining (560) the boundary segment (155,160) of the work area perimeter (150):
- determining (520) whether the boundary segment (155,160) is a movable boundary segment (155) or a non-movable boundary segment (160).
